(19) Europäisches Patentamt
European Patent Office
Office européen des brevets

(11) **EP 2 504 912 B1**

(12) **FASCICULE DE BREVET EUROPEEN**

(45) Date de publication et mention
de la délivrance du brevet:
**14.09.2016 Bulletin 2016/37**

(21) Numéro de dépôt: **10805267.1**

(22) Date de dépôt: **24.11.2010**

(51) Int Cl.:
***H02M 3/335*** (2006.01)

(86) Numéro de dépôt international:
**PCT/FR2010/052510**

(87) Numéro de publication internationale:
**WO 2011/067513 (09.06.2011 Gazette 2011/23)**

(54) **CONVERTISSEUR CONTINU-CONTINU D'ÉNERGIE ÉLECTRIQUE À PARTIR D'UNE SOURCE D'ÉNERGIE ÉLECTRIQUE CONTINUE**

GLEICHSPANNUNGSWANDLER FUR ELECTRISCHE SPANNUNG MIT EINER ELECTRISCHEN GLEICHSPANNUNGSQUELLE

DC-DC CONVERTER FOR ELECTRIC POWER USING A DC ELECTRIC POWER SOURCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.11.2009 FR 0958393**

(43) Date de publication de la demande:
**03.10.2012 Bulletin 2012/40**

(73) Titulaire: **Centre National d'Etudes Spatiales 75001 Paris (FR)**

(72) Inventeur: **SCHWANDER, Denis**
**F-31860 Labarthe Sur Leze (FR)**

(74) Mandataire: **Lavoix**
**2, place d'Estienne d'Orves**
**75441 Paris Cedex 09 (FR)**

(56) Documents cités:
**EP-A1- 0 019 096      EP-A2- 1 406 373**
**WO-A1-93/14557      DE-A1-102006 022 845**
**US-A- 5 539 630**

**EP 2 504 912 B1**

**Description**

L'invention concerne un convertisseur continu-continu destiné à convertir de l'énergie électrique fournie par une source d'énergie délivrant une première tension et un premier courant continus ayant des premières valeurs respectives en de l'énergie électrique de sortie à une seconde tension et avec un second courant continus ayant des secondes valeurs respectives.

L'invention concerne également une installation de distribution électrique notamment pour les consommateurs répartis dans un satellite artificiel.

Des convertisseurs continu-continu destinés à fournir de forts courants sous des faibles tensions sont déjà connus dans la technique. Ils sont notamment employés pour l'alimentation de satellites et autres consommateurs électriques analogues et comportent souvent un dispositif de régulation magnétique appelé « postrégulateur magnétique » par les spécialistes, prévu pour assurer une commutation du courant en vue de délivrer un courant de sortie sous une tension et/ou un courant régulé(s).

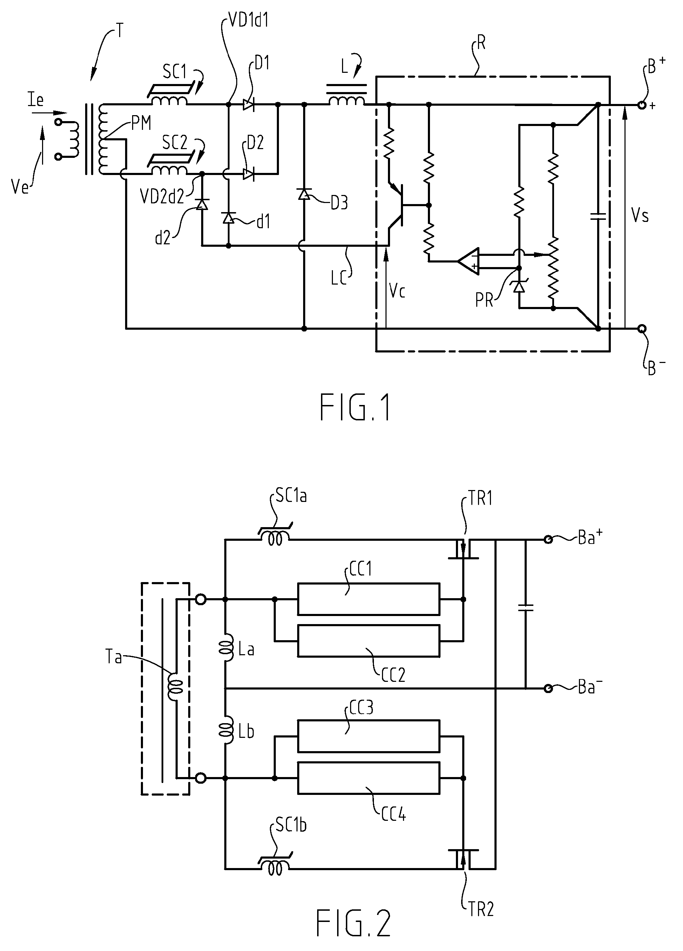

Dans un bulletin technique N°SR-4, publié en 1999 par la Société Magnetics, Butler, PA 16003, EUA, on décrit (voir la figure 1 des dessins annexés) un convertisseur continu/continu à postrégulateur magnétique. Il comprend un transformateur d'entrée 1 recevant sur son primaire un courant continu haché d'une source de courant continu (non représentée). Le secondaire de ce transformateur alimente par ses extrémités respectives deux selfs saturables $SC_1$ et $SC_2$ connectées par l'intermédiaire de diodes $D_1$ et $D_2$ à une self de lissage L reliée par ailleurs à la borne de sortie positive B+ du convertisseur.

La borne de sortie négative B- est connectée à une prise médiane PM du transformateur T. Un régulateur R produisant une référence de tension sur un point de référence PR injecte un signal de correction sur une ligne LC dans le circuit redresseur CR formé par les selfs $SC_1$ et $SC_2$ et les diodes $D_1$ et $D_2$ par l'intermédiaire de deux diodes supplémentaires $d_1$ et $d_2$ qui sont respectivement reliées aux points de jonction entre la self $SC_1$ et la diode $D_1$ d'une part et la self $SC_2$ et la diode $D_2$ d'autre part.

Le montage comprend également une diode « roue libre » $D_3$ branchée entre le noeud de la diode $D_1$ et la self de lissage L et la borne de sortie négative B- du convertisseur.

Ce convertisseur connu à postrégulateur magnétique fonctionne convenablement par commutation due à la saturation des selfs $SC_1$ et $SC_2$, mais présente l'inconvénient de nécessiter un transformateur T de construction assez complexe, car doté d'un secondaire formé de deux demi-enroulements, et d'une diode « roue libre » $D_3$. Cette dernière introduit une dissipation d'énergie de commutation liée aux charges accumulées par sa capacité parasite. En outre, le régulateur R est destiné à commander la tension de sortie par une modification du rapport cyclique de la commutation effectuée dans le convertisseur.

Par la demande de brevet japonais JP2001 275 361, et par le document US 5 539 630 on connaît un autre type de convertisseur continu/continu dont le schéma de principe est représenté sur la figure 2 des dessins annexés. Dans ce cas, on utilise un transformateur d'entrée $T_a$ dont le secondaire ne comporte pas de prise médiane. Ce secondaire alimente deux selfs saturables $SC_{1a}$ et $SC_{2a}$ qui sont raccordées à une borne de sortie positive Ba+ par l'intermédiaire de transistors $TR_1$ et $TR_2$ respectifs. Les bornes du secondaire du transformateur $T_a$ sont également connectées à des selfs de lissage $L_a$ et $L_b$ dont le noeud commun est relié à la borne de sortie négative Ba- du convertisseur. Les grilles des transistors $TR_1$ et $TR_2$ sont reliées respectivement à des circuits de commande de commutation $CC_1$ à $CC_4$ qui reçoivent leurs signaux d'entrée des bornes du secondaire.

Ce convertisseur connu constitue un doubleur de courant à redresseur synchrone et utilise des composants actifs pour obtenir la commutation. Les selfs saturables $SC_{1a}$ et $SC_{2a}$ ont ici pour fonction d'opérer, par compensation des transitoires, une commutation douce des composants actifs sans elles-mêmes participer à la détermination de la commutation. De plus, la tension de sortie est égale à la moitié de la tension de sortie du transformateur $T_a$ et ce rapport est fixe et non régulé. Il s'agit donc d'un convertisseur qui, bien que présentant un transformateur d'entrée à secondaire unique, nécessite l'utilisation de composants actifs et de leurs circuits de commande de sorte qu'en définitive ce convertisseur est plus complexe que celui du document antérieur précédemment analysé. En outre, en considérant le domaine d'application préférentiel de la présente invention, la présence de composants actifs introduit un facteur d'insécurité de fonctionnement de par les risques de panne qui sont inhérents à l'utilisation de tels composants. Le montage est donc moins approprié pour être utilisé dans une application exigeant une fiabilité sans reproches telle que celle d'une alimentation pour satellite.

L'invention a pour but de fournir un convertisseur continu/continu à sortie régulée dépourvu de composants actifs et surtout de diode de « roue libre » et dans certains cas d'un transformateur à secondaire divisé.

L'invention a donc pour objet un convertisseur continu-continu destiné à convertir de l'énergie électrique fournie par une source d'énergie délivrant une première tension et un premier courant continus ayant des premières valeurs respectives en de l'énergie électrique de sortie à une seconde tension et avec un second courant continus ayant des secondes valeurs respectives, ce convertisseur comprenant

- un onduleur alimenté par ladite source d'énergie et destiné à engendrer de l'énergie alternative à une troisième tension et avec un troisième courant,
- une unité de conversion destinée à délivrer ladite énergie de sortie, et
- un régulateur associé à ladite unité de conversion pour réguler ladite seconde tension,
- ladite unité de conversion comprenant un transformateur alimenté par ledit onduleur et débitant dans un redresseur commandé destiné à fournir ladite seconde tension,
- ledit redresseur commandé comprenant deux circuits série à sens de conduction opposés composés chacun d'une diode de puissance et d'une self saturable, lesdites selfs saturables commandant par voie magnétique, au cours de chaque cycle de la troisième tension délivrée par ledit onduleur, les instants de mise en conduction et hors conduction desdites diodes de puissance,
- et ledit régulateur étant connecté pour analyser ladite seconde tension de ladite énergie de sortie et pour, en fonction de cette analyse, engendrer une tension de commande destinée à réguler ladite seconde tension,
- ledit redresseur commandé comprenant également deux diodes de régulation connectées pour injecter ladite tension de commande respectivement aux noeuds de connexion entre la diode de puissance et la self saturable desdits circuits série dudit redresseur commandé,
- ledit convertisseur étant caractérisé en ce qu'il comprend également un circuit réactif série associé audit transformateur et coopérant avec ledit redresseur commandé pour déphaser ladite troisième tension par rapport audit troisième courant, et
- en ce que ladite tension de commande régule le déphasage entre ceux-ci en fonction des variations de ladite seconde tension.

Grâce à ces caractéristiques, il devient possible de concevoir des convertisseurs continu-continu dépourvus de diodes « roues libres » ou de transistors de commutation, tout en ayant un fonctionnement stable parfaitement maîtrisé.

Suivant d'autres caractéristiques avantageuses de l'invention :

- ledit circuit réactif série peut comprendre une inductance montée entre ledit onduleur et ledit transformateur ;
- ledit circuit réactif peut être matérialisé dans ledit transformateur qui présente à cet effet une inductance de fuite significative entre son primaire et son secondaire faiblement couplés entre eux;
- ledit circuit réactif série peut comprendre une inductance et une capacité montées en série entre ledit onduleur et ledit transformateur ;
- au moins une partie dudit circuit réactif série peut être formée par le câblage reliant ledit onduleur audit transformateur ;
- ledit transformateur peut comprendre un secondaire fait de deux demi-enroulements fortement couplés entre eux et alimentant chacun l'un des circuits série d'une diode de puissance et d'une self saturable, ladite seconde tension pouvant être prélevée entre le point milieu entre les demi-enroulements dudit secondaire et le noeud entre lesdites diodes de puissance ;
- ledit redresseur commandé peut être monté en doubleur de tension ;
- ledit transformateur peut comprendre un secondaire dont l'une des bornes est connectée auxdits circuits série d'une diode de puissance et d'une self saturable, et dont l'autre borne est connectée à chacune desdites diodes par l'intermédiaire d'un condensateur.

En outre, dans le cas où le redresseur est monté en doubleur de tension,

- ledit circuit réactif série peut comprendre une inductance montée entre le secondaire du transformateur et ledit doubleur de tension ;

- ledit circuit réactif peut comprendre une inductance et une capacité montées en série entre le secondaire dudit transformateur et ledit doubleur de tension ; ou
  ledit circuit réactif peut être matérialisé dans ledit transformateur grâce à une répartition par construction entre le primaire et le secondaire de celui-ci.

L'invention a également pour objet une installation de distribution d'énergie électrique notamment pour satellite, caractérisée en ce qu'elle comprend un convertisseur continu-continu tel que défini ci-dessus construit avec une pluralité d'unités de conversion raccordées chacune audit onduleur par l'intermédiaire d'un câblage individuel, chacune desdites unités de conversion comportant son propre régulateur de tension.

Cette installation peut également être conçue de manière à comprendre un convertisseur continu-continu tel que défini ci-dessus construit avec une pluralité d'unités de conversion, lesdites unités de conversion étant réparties en groupes d'au moins trois unités dont les sorties sont mises en parallèle et qui sont raccordées par un câble multifilaire audit onduleur.

Dans ce cas, dans chacun desdits groupes d'unités de conversion, celles-ci peuvent être reliées en triangle ou en étoile et/ou être régulées par un régulateur unique commun.

L'installation de distribution d'énergie électrique peut également être conçue pour comprendre un convertisseur tel que défini ci-dessus et construit avec une pluralité d'unités de conversion alimentées par un transformateur commun comprenant une pluralité de secondaires à raison d'un par unité. Dans ce cas, chacune desdites unités de conversion peut être pourvue de son propre régulateur.

Enfin, selon un mode de réalisation avantageux, l'installation de distribution d'énergie électrique notamment pour satellite, est caractérisée en ce qu'elle comprend un convertisseur tel que défini ci-dessus construit avec une pluralité d'unités de conversion agencées en au moins un groupe d'unités de conversion alimentées par l'intermédiaire d'un transformateur commun raccordé par son primaire audit onduleur et comprenant autant de secondaires qu'il y a d'unités de conversion dans un groupe,

- l'une desdites unités de conversion d'un groupe étant une unité de conversion pilote formée d'un redresseur symétrique dépourvu de moyens de déphasage,
- ledit onduleur étant réglable,
- l'installation comprenant une boucle de réglage agissant sur ledit onduleur pour le régler en fonction d'un signal de différence entre un signal de référence de tension et un signal fonction de la tension de sortie de ladite unité de conversion pilote et les autres unités de conversion d'un groupe étant pourvues de leur propre régulateur.

L'invention est décrite de façon plus détaillée à propos d'exemples de réalisation et en se référant aux dessins.

Les figures 1 et 2 déjà décrites représentent des schémas de convertisseurs continu/continu de la technique antérieure ;
la figure 3 représente un schéma d'un mode de réalisation préféré du convertisseur continu/continu selon l'invention ;
les figures 4 et 5 montrent deux variantes d'une unité de conversion pouvant être utilisées dans le convertisseur représenté sur la figure 3;
la figure 6 illustre le fonctionnement d'une part du convertisseur de l'art antérieur de la figure 1 par ses diagrammes a) et b) et d'autre part du convertisseur de la figure 3 par ses diagrammes c) et d);
la figure 7 illustre davantage le fonctionnement du convertisseur de la figure 3;
les figures 8, 9 et 10 montrent trois autres variantes d'unités de conversion pouvant être utilisées dans le convertisseur selon l'invention, ces unités étant conçues selon le principe du doubleur de tension;
Les figures 8a, 8b, 10a et 10b montrent des variantes de réalisation des convertisseurs représentés respectivement sur les figures 8 et 10;
la figure 11 montre une installation de distribution d'énergie électrique, notamment pour satellite de télécommunication, comprenant un convertisseur selon l'invention avec une pluralité d'unités de conversion du type représenté sur la figure 3 ou sur la figure 8, les unités de conversion étant connectées individuellement à l'onduleur du convertisseur ;
la figure 12 est un schéma analogue à celui de la figure 11, et montre une installation de distribution d'énergie électrique dans laquelle le convertisseur comprend un onduleur polyphasé, plus précisément triphasé, alimentant une pluralité de groupes d'unités de conversion connectées selon un schéma triphasé, ici en étoile ;
la figure 13 montre le schéma d'une installation de distribution d'énergie électrique selon l'invention comprenant trois unités de conversion dotées chacune de son propre régulateur de la tension de sortie; et
la figure 14 est un schéma d'une installation de distribution d'énergie électrique selon l'invention comprenant trois unités de conversion et dotée d'un dispositif de régulation globale combiné à des régulateurs individuels des unités de conversion.

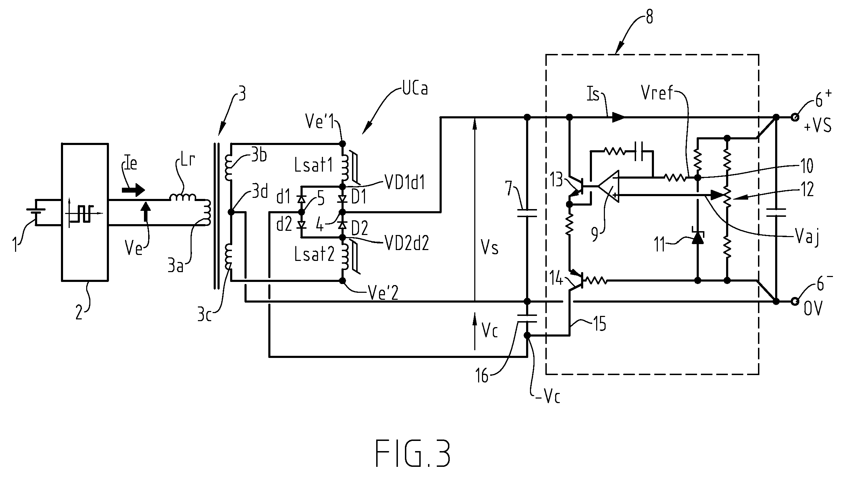

On va d'abord se référer à la figure 3 qui représente le mode de réalisation préféré de l'invention. Dans ce cas, le convertisseur continu/continu est alimenté à partir d'une source 1 de courant continu, par exemple la barre de puissance primaire dans le cas d'un satellite de télécommunication. Cette source 1 alimente un onduleur 2 à tension alternative symétrique dont la sortie est reliée à une unité de conversion alternatif-continu $UC_a$ appelée parfois «postrégulateur symétrique » par les spécialistes. Cette unité de conversion $UC_a$ comprend un transformateur 3 équipé d'un primaire $3_a$ et d'un secondaire comportant ici deux demi-enroulements $3_b$ et $3_c$ fortement couplés à point milieu $3_d$.

Le primaire $3_a$ du transformateur 3 est connecté à la sortie de l'onduleur 2 par l'intermédiaire d'un circuit réactif série formé, dans cet exemple, d'une inductance $L_r$. La fréquence de résonance de ce circuit est de préférence inférieure à la fréquence de fonctionnement du convertisseur. On appellera $I_e$ le courant d'entrée envoyé dans l'inductance $L_r$ et $V_e$ la tension d'entrée appliquée à l'unité de conversion $UC_a$ raccordée à l'onduleur 2.

Les bornes des demi-enroulements $3_b$ et $3_c$ opposées au point milieu $3_d$ sont reliées à des selfs saturables

respectives $L_{sat1}$ et $L_{sat2}$. Celles-ci sont reliées entre elles par l'intermédiaire d'un circuit série de deux diodes de puissance en tête-bêche $D_1$ et $D_2$ shuntées par un circuit série de deux autres diodes de régulation en tête-bêche $d_1$ et $d_2$ montées respectivement en sens opposés par rapport à ces dernières. On appellera noeud 4 le point de jonction entre les diodes $D_1$ et $D_2$, et noeud 5 le point de jonction entre les diodes $d_1$ et $d_2$. Le circuit que l'on vient de décrire forme un redresseur commandé, la commande étant assurée de la façon décrite ci-après.

Le noeud 4 est relié à la borne de sortie positive 6+ du convertisseur, la borne négative 6- (ici à 0 V) de ce dernier étant connectée au point milieu $3_d$ du secondaire du transformateur 3. On appellera tension de sortie $V_s$, la tension régnant entre les bornes 6+ et 6-.

Un condensateur 7 est connecté entre les bornes de sortie 6+ et 6-.

Le convertisseur comprend également un régulateur 8 destiné à maintenir constante la tension de sortie $V_s$ en fonction de la charge qui est appliquée au convertisseur.

Ce régulateur 8 comprend un amplificateur opérationnel 9 dont les entrées reçoivent respectivement une référence de tension $V_{ref}$ établie sur un noeud 10 par une diode Zener 11, et une tension d'ajustement $V_{aj}$ provenant d'un diviseur de tension réglable 12. La sortie de l'amplificateur 9 commande un transistor 13 fixant avec un autre transistor en série 14, une tension de commande $-V_c$ apparaissant sur la borne de sortie 15 du régulateur 8 raccordée au noeud 5 entre les diodes de régulation $d_1$ et $d_2$. Ce point est également connecté au noeud 4 entre les diodes de puissance $D_1$ et $D_2$ par l'intermédiaire d'un condensateur 16. Dans le présent mode de réalisation, la tension de commande $-V_c$ est référencée par rapport au potentiel de la borne de sortie négative 6-. Selon une variante non représentée, on peut également référencer la tension de commande à la borne positive du convertisseur.

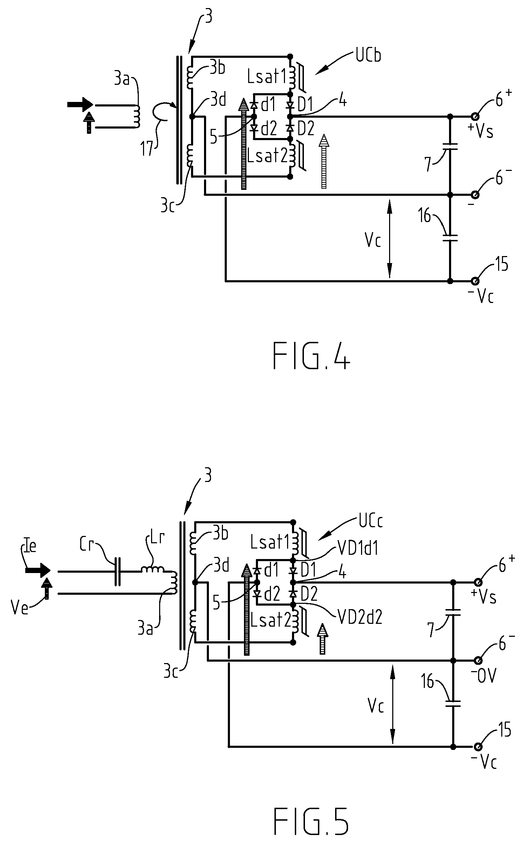

La figure 4 montre une variante d'unité de conversion $UC_b$ selon l'invention, le schéma du régulateur 8 n'étant pas représenté. Dans ce cas, la fonctionnalité du circuit réactif série est matérialisé dans le transformateur 3 lui-même qui présente alors une inductance de fuite significative (obtenu par un faible couplage symbolisé par la flèche 17) entre le primaire $3_a$ et les demi-enroulements $3_b$ et $3_c$ du secondaire de ce transformateur. Cette inductance de fuite fait office de l'inductance appartenant au circuit réactif.

Sur la figure 5, on a représenté une autre variante d'unité de conversion $UC_c$ dans laquelle le transformateur 3 est agencé comme celui de la figure 3, l'inductance $L_r$ étant dans ce cas reliée en série avec un composant capacitif $C_r$.

Les montages selon l'invention venant d'être décrits à propos des figures 3 à 5 opèrent tous un déphasage $\delta$ entre le courant d'entrée $I_e$ et la tension d'entrée $V_e$ afin de permettre une régulation de la tension de sortie $V_s$.

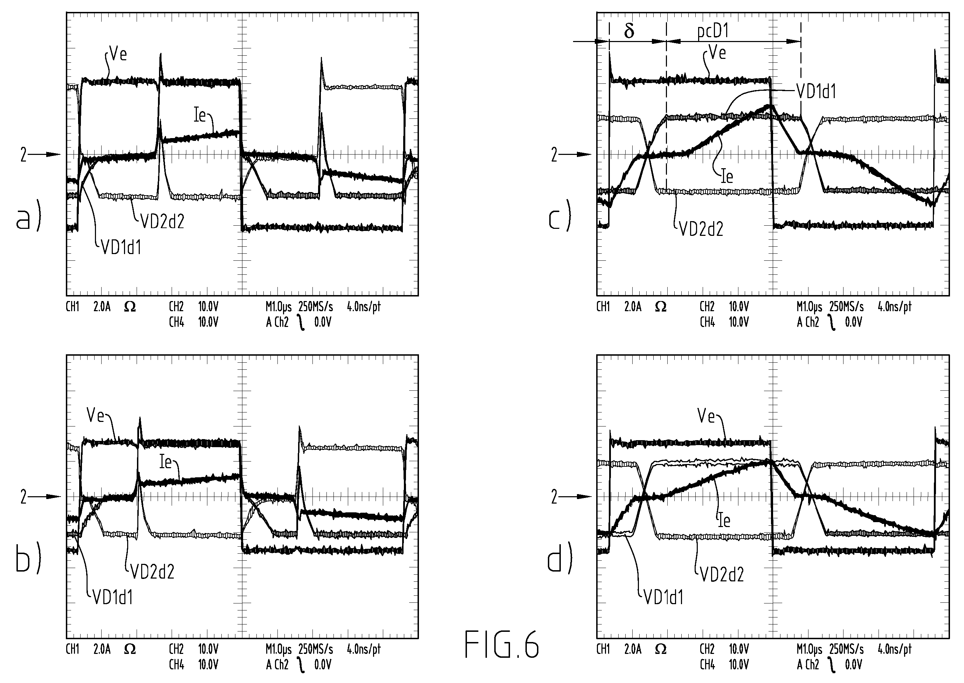

Afin d'illustrer le fonctionnement du convertisseur selon l'invention et à en mettre en évidence les différences par rapport aux convertisseurs de l'art antérieur, on a représenté sur la figure 6 deux jeux de courbes mesurées d'une part sur un convertisseur classique du type appelé communément « push-pull » ou « forward » symétrique à régulation magnétique par les spécialistes (figure 1 ; diagrammes a) et b) de la figure 6) et d'autre part sur un convertisseur selon l'invention tel que celui représenté sur la figure 3 (diagrammes c) et d) de la figure 6).

Dans le cas des diagrammes a) et c), la tension d'entrée $V_e$ est de 20V, la tension de sortie $V_s$ est de +10V et la tension de commande $V_c$ est de -10V. Dans le cas des diagrammes b) et d), ces valeurs sont respectivement de 15V, +10V et -10V. Dans chaque diagramme, les courbes représentées, relevées sur des montages expérimentaux par le Demandeur, sont respectivement dans l'ordre décroissant des grisés le courant d'entrée $I_e$, la tension d'entrée $V_e$, la tension $V_{D1d1}$ sur le noeud situé entre la diode de puissance $D_1$ et la diode de régulation $d_1$ et la tension $V_{D2d2}$ sur le noeud situé entre la diode de puissance $D_2$ et la diode de régulation $d_2$.

Dans le convertisseur classique de la figure 1, la mise en conduction des diodes $D_1$ et $D_2$ se produit avec un retard par rapport à la montée de la tension en raison du fait que les selfs saturables $SC_1$ et $SC_2$ doivent se saturer. Par ailleurs, la mise hors conduction des diodes $D_1$ et $D_2$ se produit lorsque la tension s'inverse. Pendant que les diodes conduisent, le courant qui les parcourt est constant (en supposant que les selfs soient parfaites) ou à peu près constant. Lorsque la tension s'inverse, le courant parcourant les diodes tombe brutalement à zéro. On notera en outre que la régulation de la tension de sortie $V_s$ est obtenue en imposant une variation du rapport cyclique de la tension d'entrée $V_e$ et du courant d'entrée $I_e$. Enfin, dans le cas de la figure 1, on doit utiliser une diode « roue libre » $D_3$ afin de forcer la mise hors conduction des diodes $D_1$ et $D_2$.

En revanche, en examinant les diagrammes c) et d) de la figure 6 qui s'appliquent aux variantes du circuit représentées sur les figures 3, 4 et 5, on peut constater le fonctionnement suivant.

Les tensions $V_{D1d1}$ et $V_{D2d2}$ évoluent entre la tension $V_s$ et la tension $-V_c$ avec un rapport cyclique constant et proche de 1/2 et présentent un déphasage $\delta$ par rapport à la tension $V_e$, ce qui signifie que la conduction des diodes de puissance est rigoureusement déphasée par rapport à la tension alternative $V_e$, contrairement au montage classique où c'est le rapport cyclique qui varie. La période de conduction $pc_{D1}$ de la diode $D_1$ ainsi que le déphasage $\delta$ sont indiqués sur le diagramme c) de la figure 6. La mise en conduction des diodes de puissance $D_1$ et $D_2$ se produit aussi avec un retard par rapport à la montée de la tension en raison du phénomène de saturation des selfs saturables $L_{sat1}$ et $L_{sat2}$.

Cependant, la mise hors conduction des diodes $D_1$ et $D_2$ se produit lorsque le courant dans la self de résonance disparaît, ce courant commençant à se réduire dès l'instant où la tension s'inverse. Cette différence de fonctionnement par rapport au circuit classique est due à la présence de moyens de déphasage en courant associés au transformateur 3, que cela soit sous forme du circuit résonnant (self $L_r$, figure 3), du transformateur à inductance de fuite importante (référence 17, figure 4) ou de la self $L_r$ combinée à la capacité $C_r$ (figure 5).

Il résulte de ce fonctionnement des convertisseurs selon l'invention que les diodes changent de manière naturelle de l'état de conduction à l'état de non conduction sans l'aide d'une diode de « roue libre », ce qui permet de l'éliminer et de supprimer ainsi les pertes de commutation et l'émission de parasites qui se rattachent au fonctionnement d'une telle diode. En outre, la régulation de la tension de sortie $V_s$ est effectuée non pas en modifiant le rapport cyclique des courants, mais en faisant varier le déphasage $\delta$ de celui-ci par rapport à la tension initiée par les moyens de déphasage associés au transformateur 3.

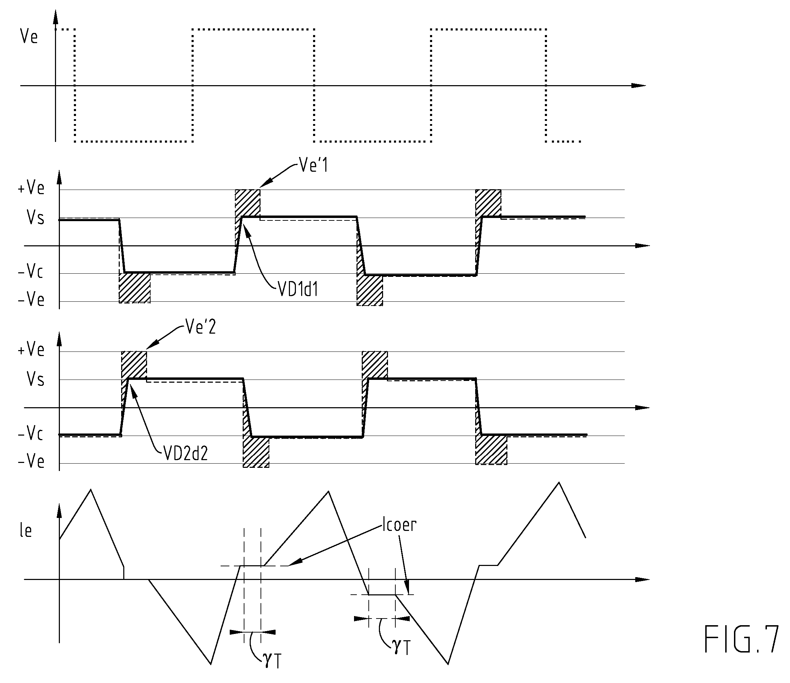

La figure 7 montre par des courbes théoriques stylisées l'évolution des tensions aux bornes des selfs saturables $L_{sat1}$ et $L_{sat2}$ permettant de déduire les flux positifs et négatifs dans ces selfs saturables, ces flux F+ et F- devant être égaux sur un cycle correspondant respectivement aux deux relations suivantes :

$$F^+ = \gamma T * \left( V_e - V_s \right) \qquad \text{et} \qquad F^- = \gamma T * \left( V_e - V_c \right)$$

dans lesquelles $\gamma T$ représente la durée de l'intervalle de temps pendant lequel les selfs saturables conduisent le courant coercitif $I_{coer}$ en supposant que le rapport de transformation est égal à 1. Pour d'autres valeurs du rapport de transformation, il faut naturellement multiplier la grandeur $V_e$ par ce rapport.

Ici, le déphasage dépend de la charge, ainsi que d'autres paramètres. Cependant, la tension de sortie est liée théoriquement à la tension de commande par l'égalité $V_s=V_c$ qui reste globalement vérifiée dans le cas réel où le temps de décharge des capacités des diodes intervient également et modifie légèrement ce comportement.

Il est également à noter que dans les cas des figures 3 à 5, la puissance maximale pouvant être transmise par le convertisseur sera limitée par la valeur de l'impédance série à la fréquence de fonctionnement selon la relation :

$$P_{s\max} = r * \frac{V_e * V_s}{Z}$$

$$avec Z = L_r * \omega \quad \text{(sans capacité ; figures 3 et 4)}$$

$$avec Z = L_r * \omega - \frac{1}{C_r * \omega} \quad \text{(avec capacité ; figure 5)}$$

dans lesquelles r est une constante et w la fréquence de fonctionnement de l'onduleur 2 multiplié par $\pi$.

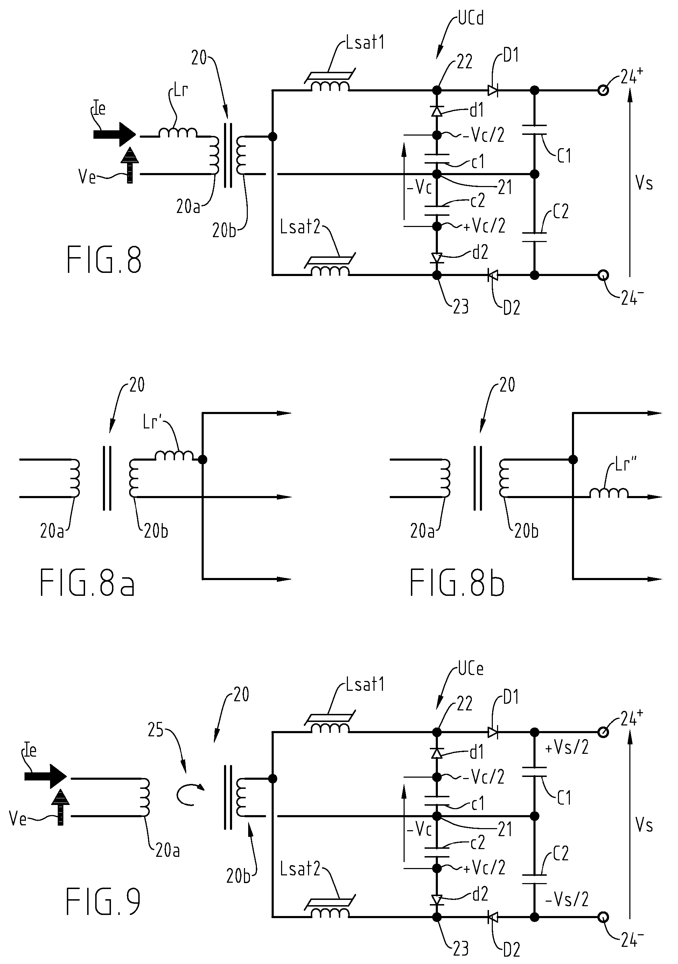

On va maintenant décrire trois autres variantes du convertisseur selon l'invention en se référant aux figures 8 à 10. Ces variantes d'unités de conversion $UC_d$, $UC_e$ et $UC_f$ sont basées sur le principe du « doubleur de tension » avec régulation magnétique par déphasage. Elles ont un fonctionnement analogue à celui des unités représentées respectivement sur les figures 3 à 5. Ni l'onduleur 2, ni le régulateur 8 n'ont été représentés.

Dans la variante de la figure 8, l'unité de conversion $UC_d$ comprend un circuit réactif série formé d'une inductance $L_r$ connectée au primaire $20_a$ d'un transformateur 20.

Une extrémité du secondaire $20_b$ de ce transformateur 20 est reliée à deux selfs saturables $L_{sat1}$ et $L_{sat2}$. L'autre extrémité du secondaire $20_b$ forme un noeud central 21 de l'unité de conversion $UC_d$. Deux condensateurs $c_1$ et $c_2$ sont reliés respectivement en série avec deux diodes de régulation en opposition $d_1$ et $d_2$ à des noeuds 22 et 23. Ces noeuds 22 et 23 sont reliés respectivement aux deux selfs $L_{sat1}$ et $L_{sat2}$ et à deux diodes de puissance $D_1$ et $D_2$ montées en opposition l'une par rapport à l'autre. Ces diodes sont reliées respectivement à deux condensateurs $C_1$ et $C_2$ connectés par ailleurs au noeud central 21. Les noeuds entre les diodes $D_1$ et le condensateur $C_1$ et celui entre la diode $D_2$ et le condensateur $C_2$ forment les bornes de sortie positive 24+ et négative 24- de l'unité de conversion $UC_d$. La tension de régulation $-V_c$ est ici appliquée aux bornes des condensateurs $c_1$ et $c_2$ en série qui sont reliées aux diodes $d_1$ et $d_2$, respectivement.

La variante de l'unité de conversion $UC_e$ selon la figure 9 est construite de la même façon que celle de la figure 8, sauf qu'il n'est pas prévu dans ce cas, un circuit réactif série comme dans la figure 8, mais un transformateur 20 à faible couplage créant une fuite inductive importante de manière analogue à celle appliquée dans le cas de la figure 4, cette propriété étant symbolisée par la flèche 25.

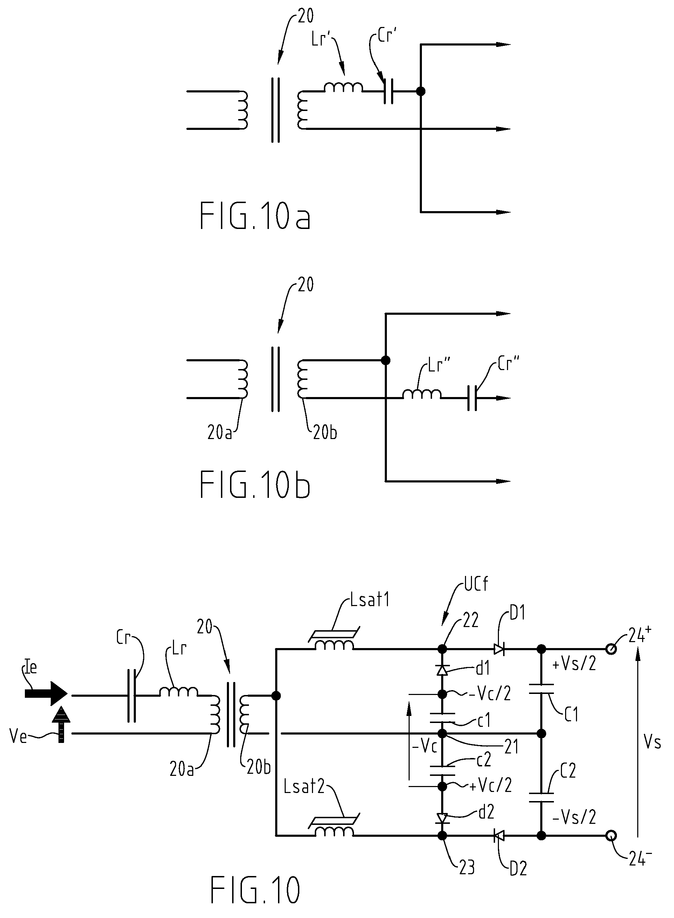

L'unité de conversion $UC_f$ de la figure 10 diffère de celui de la figure 8 en ce que le circuit réactif série en amont du transformateur 21 est composé d'une inductance $L_r$ et d'une capacité $C_r$.

Sur les figures 8a et 8b, on a représenté deux variantes de l'agencement du circuit résonnant du convertisseur de la figure 8. Dans le premier cas, au lieu de l'impédance $L_r$ montée dans le circuit du primaire $20_a$ du transformateur 20, on a prévu une telle impédance $L_r'$ entre le secondaire $20_b$ de celui-ci et les selfs saturables $L_{sat1}$ et $L_{sat2}$ (ici non dessinées). Dans le cas de la figure 8b, on prévoit une self $L_r''$ entre le secondaire $20_b$ et le noeud 21 (ici également non dessiné).

Les figures 10a et 10b représentent des dispositions analogues du circuit résonnant composé dans ce cas d'une impédance $L_r'$ ou $L_r''$ et d'une capacité $C_r'$ ou $C_r''$ et monté côté secondaire du transformateur 20.

Selon des variantes qui n'ont pas été représentées aux dessins, il est également possible de scinder en deux le circuit résonnant en deux parties et de placer ces parties respectivement de part et d'autre du transformateur 20. Dans ce cas, on peut éventuellement ajouter une capacité de résonance qui serait alors placée en série côté primaire et/ou côté secondaire.

Dans le cas de la figure 9, l'inductance du circuit réactif est répartie par construction entre le primaire et le secondaire du transformateur 20.

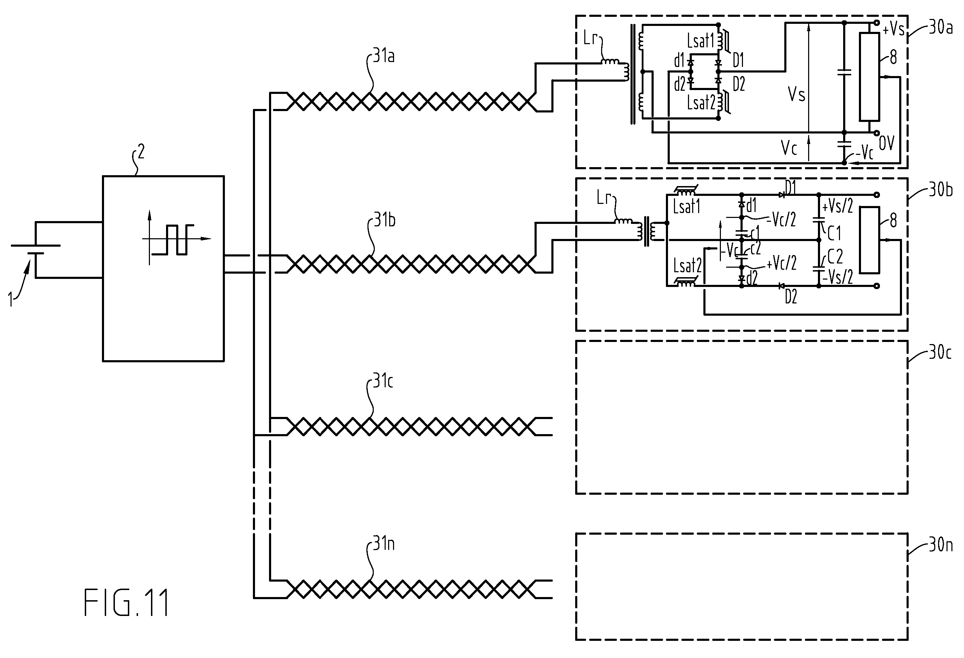

La figure 11 représente un premier exemple d'une installation de distribution d'énergie électrique utilisant une pluralité de convertisseurs construits conformément à l'une ou l'autre des variantes qui viennent d'être décrites. Cette installation peut avantageusement être incorporée par exemple dans un satellite de télécommunications dans lequel des unités de conversion $30_a$ à $30_n$ sont prévues au plus près des divers consommateurs d'énergie répartis dans le satellite. Dans ce cas, toutes les unités $30_a$ à $30_n$ sont alimentées en commun par une source de courant continu 1 telle que la barre de puissance primaire régulée ou non du sous-système de puissance du satellite débitant dans un onduleur 2 commun également à toutes les unités. Celles-ci sont alors reliées en parallèle à cet onduleur 2 par l'intermédiaire de câbles bifilaires individuels $31_a$ à $31_n$ dont on peut éventuellement exploiter les propriétés inductives et ou capacitives.

L'installation de la figure 11 peut comporter des unités de conversion du type des figures 3, 4 ou 5 ou des figures 8, 8a, 8b, 9, 10, 10a ou 10b, le schéma montrant à titre d'exemple uniquement l'emploi d'une unité de conversion $30_a$ selon la figure 3 et d'une unité de conversion $30_b$ conformément à la figure 8.

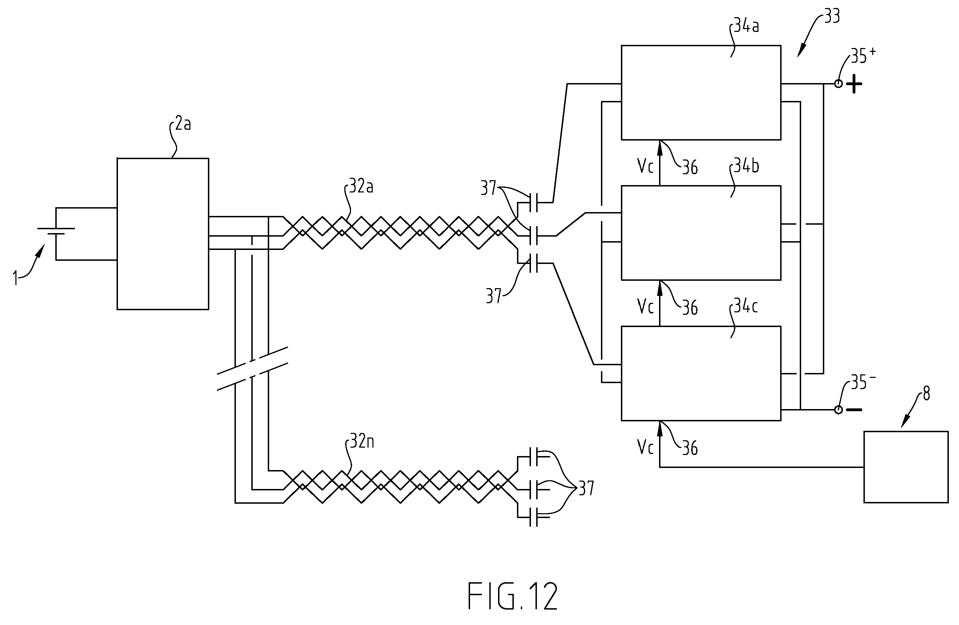

La figure 12 représente un second exemple d'installation de distribution d'énergie électrique du type décrit ci-dessus à propos de la figure 11. Cependant, dans ce cas, on prévoit un onduleur $2_a$ qui transforme le courant continu de la source 1 en un courant triphasé débité par cet onduleur dans des câbles trifilaires $32_a$ à $32_n$ connectés à autant de groupes 33 d'unités de conversion dont seul celui connecté au câble $32_a$ est représenté. Comme dans le cas de la figure 11, les unités de conversion peuvent être construites selon toutes les variantes décrites précédemment.

Les groupes d'unités de conversion 33 sont ici de type triphasé et comptent donc chaque fois trois unités, $34_a$, $34_b$ et $34_c$, avec des transformateurs d'entrée individuels, non représentés, dont les primaires sont connectés en montage en étoile. Dans les deux cas, les sorties en courant continu, fournies sur des bornes 35+ et 35-des unités de conversion $34_a$, $34_b$ et $34_c$ de chaque groupe 33 sont connectées en parallèle et la tension de commande $V_c$ peut être produite par un régulateur 8 affecté au groupe et appliquant cette tension en parallèle aux trois unités $34_a$ à $34_c$ du groupe par l'intermédiaire des bornes 36.

On notera également que les câbles trifilaires $32_a$ à $32_n$ sont connectés aux primaires des transformateurs des unités de conversion par l'intermédiaire de capacités 37 qui peuvent, le cas échéant, servir de composants pour les circuits réactifs série en combinaison avec les inductances formées par les câbles $32_a$ à $32_n$.

La variante décrite ci-dessus à propos de la figure 12 peut être réalisée en triangle ou éventuellement en version polyphasée (plus de trois phases) L'homme de métier saura réaliser de telles variantes polyphasées en adaptant en conséquence la version triphasée qui vient d'être décrite.

Les avantages des variantes tri- ou polyphasées sont importants. En effet, une conception polyphasée de l'installation selon l'invention permet d'en augmenter la puissance sans augmenter la puissance unitaire des composants de puissance utilisés, comme les diodes, les selfs saturables et les capacités. Elle permet en outre à fréquence de fonctionnement et avec un filtrage identiques de réduire le courant d'ondulation, comparé au cas d'une version monophasée. Il en résulte pour une puissance donnée globale de l'installation une réduction de poids, d'encombrement et de coût.

Enfin, une version polyphasée présente une meilleure tolérance aux pannes puisqu'une installation polyphasée pourrait encore fonctionner, certes en mode dégradé avec une ou plusieurs phases non fonctionnelles, mais sans empêcher un fonctionnement réduit des consommateurs d'énergie. Ceci peut représenter un avantage particulier dans le contexte d'un satellite de télécommunications.

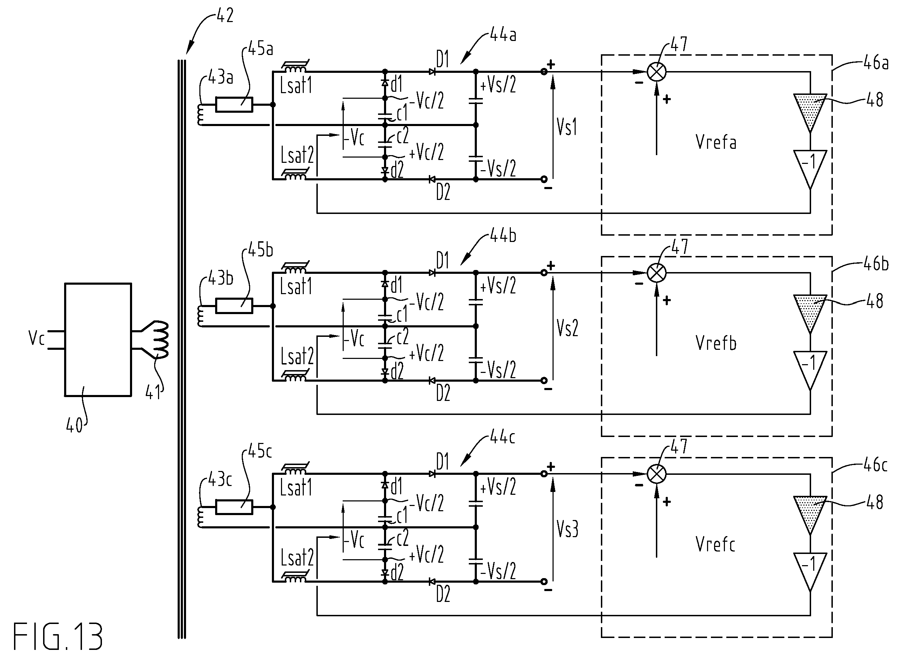

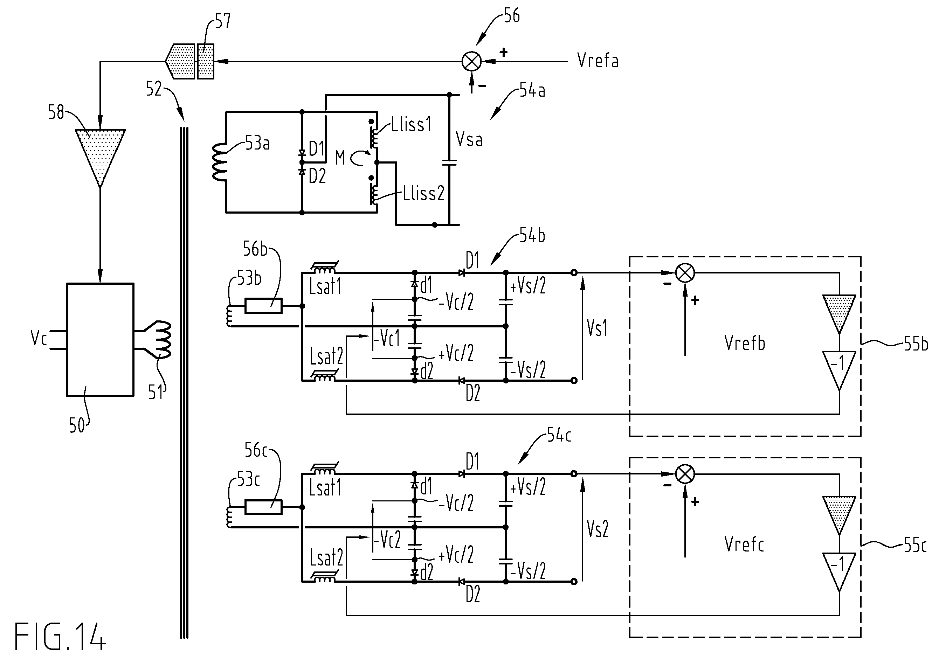

Les figures 13 et 14 représentent deux agencements possibles de la régulation d'une installation de conversion selon l'invention.

Dans le cas de la figure 13, un onduleur 40 alimente en monophasé l'enroulement primaire 41 d'un transformateur 42 comportant trois enroulements secondaires $43_a$, $43_b$ et $43_c$. Ceux-ci sont connectés respectivement à trois unités de conversion $44_a$, $44_b$ et $44_c$ conçus selon le principe de la figure 8, par exemple.

Dans ce cas, des impédances, $45_a$, $45_b$ et $45_c$ respectivement, sont insérées entre chaque secondaire $43_a$,

$43_b$ et $43_c$ et l'unité de conversion $44_a$, $44_b$ et $44_c$ correspondante. Une telle impédance peut alors être formée par un condensateur et une inductance en série ou par une inductance seule.

Chacune de ces unités de conversion est associée à son propre régulateur $46_a$, $46_b$ et $46_c$ pouvant être construit comme le régulateur 8 de la figure 3 par exemple. A chacun de ces régulateurs est appliquée une tension de référence indépendante, $V_{refa}$, $V_{refb}$ et $V_{refc}$ respectivement qui fournit une référence pour une boucle de réglage symbolisée ici par les comparateurs 47 et les amplificateurs 48. Ainsi, chaque unité de conversion régule sa propre tension de sortie en fonction des charges qui lui sont appliquées.

Dans le cas de la figure 14, le convertisseur comprend un onduleur 50 qui est ici régulé. Il alimente le primaire 51 d'un transformateur 52 ayant trois secondaires $53_a$, $53_b$, $53_c$ raccordés respectivement à trois unités de conversion $54_a$, $54_b$ et $54_c$, les unités $54_b$ et $54_c$ étant réalisées conformément à celle représentée sur la figure 8, par exemple. Ces unités de conversion sont associées à des régulateurs $55_b$ et $55_c$ conçus comme les régulateurs $46_a$ à $46_c$ de la figure 13 en employant le schéma de la figure 3 par exemple. Ces régulateurs reçoivent les tensions de référence $V_{refb}$ et $V_{refc}$.

L'unité de conversion $54_a$ est un simple redresseur symétrique dépourvu de moyens de déphasage et comprenant des diodes de puissance $D_1$ et $D_2$ et des selfs de lissage $L_{liss1}$ et $L_{liss2}$. La tension de sortie $V_{Sa}$ de cette unité de conversion est comparée à une tension de référence $V_{refa}$ dans un comparateur 56 qui engendre un signal de régulation pour l'onduleur régulé 50 auquel il est transmis par l'intermédiaire d'un dispositif d'isolation galvanique 57, tel qu'un opto-coupleur par exemple, et d'un amplificateur d'erreur 58 de type PID, par exemple. La sortie de cet amplificateur forme ainsi la consigne de tension pour l'onduleur 50.

Dans l'installation selon la figure 14, la régulation commandant l'onduleur 50 est faite en fonction des variations de la tension de sortie $V_{sa}$ dues par exemple aux variations de sa charge. Cette régulation commande le régime de fonctionnement de l'onduleur 50 de manière à déterminer de façon « grossière » les tensions de sortie de toutes les unités de conversion. Les régulations opérées par les régulateurs $55_b$ et $55_c$ assurent une régulation fine des tensions de sortie des unités de conversion $54_b$ et $54_c$.

Dans ce cas également, des impédances, $56_b$ et $56_c$ respectivement, sont insérées entre les secondaires $53_b$ et $53_c$ et l'unité de conversion $54_b$ et $54_c$ correspondante. Une telle impédance peut alors être formée par un condensateur et une inductance en série ou par une inductance seule.

Les solutions de régulation représentées sur les figures 13 et 14 ont l'avantage important de travailler sans pertes notables d'énergie par opposition aux solutions classiques dans lesquelles les tensions de sortie des convertisseurs sont en général ajustées moyennant des ballasts dissipatifs.

## Revendications

1.  Convertisseur continu-continu destiné à convertir de l'énergie électrique fournie par une source d'énergie (1) délivrant une première tension et un premier courant continus ayant des premières valeurs respectives en de l'énergie électrique de sortie à une seconde tension ($V_s$) et avec un second courant ($I_s$) continus ayant des secondes valeurs respectives, ce convertisseur comprenant

    - un onduleur (2) alimenté par ladite source d'énergie (1) et destiné à engendrer de l'énergie alternative à une troisième tension ($V_e$) et avec un troisième courant ($I_e$),
    - une unité de conversion ($UC_a$ à $UC_f$) destinée à délivrer ladite énergie de sortie, et
    - un régulateur (8) associé à ladite unité de conversion ($UC_a$ à $UC_f$) pour réguler ladite seconde tension ($V_s$),
    - ladite unité de conversion ($UC_a$ à $UC_f$) comprenant un transformateur (3 ; 20) alimenté par ledit onduleur (2) et débitant dans un redresseur commandé destiné à fournir ladite seconde tension ($V_s$),
    - ledit redresseur commandé comprenant deux circuits série à sens de conduction opposés composés chacun d'une diode de puissance ($D_1$, $D_2$) et d'une self saturable ($L_{sat1}$, $L_{sat2}$), lesdites selfs saturables commandant par voie magnétique, au cours de chaque cycle de la troisième tension ($V_e$) délivrée par ledit onduleur (2), les instant de mise en conduction et hors conduction desdites diodes de puissance ($D_1$, $D_2$),
    - et ledit régulateur (8) étant connecté pour analyser ladite seconde tension ($V_s$) de ladite énergie de sortie et pour, en fonction de cette analyse, engendrer une tension de commande ($-V_c$) destinée à réguler ladite seconde tension ($V_s$),
    - ledit redresseur commandé comprenant également deux diodes de régulation ($d_1$, $d_2$) connectées pour injecter ladite tension de commande ($-V_c$) respectivement aux noeuds de connexion entre la diode de puissance ($D_1$ ; $D_2$) et la self saturable ($L_{sat1}$, $L_{sat2}$) desdits circuits série dudit redresseur commandé,

    ledit convertisseur étant **caractérisé en ce qu'**il comprend également un circuit réactif série ($L_r$; 17; $L_r$, $C_r$; $L_r'$, $C_r'$; 25 ; Lr'', $C_r''$) associé audit transformateur (3; 20) et coopérant avec ledit redresseur commandé pour déphaser ladite troisième tension ($V_e$) par rapport audit troisième courant ($I_e$), et **en ce que** ladite tension de commande ($V_c$)

régule le déphasage entre ceux-ci en fonction des variations de ladite seconde tension ($V_s$).

2. Convertisseur continu-continu selon la revendication 1, **caractérisé en ce que** ledit circuit réactif série comprend une inductance ($L_r$) montée entre ledit onduleur (2) et ledit transformateur (3).

3. Convertisseur continu-continu selon la revendication 1, **caractérisé en ce que** ledit circuit réactif est matérialisé dans ledit transformateur (3; 20) qui présente à cet effet une inductance de fuite significative (17; 25) entre son primaire ($3_a$; $20_a$) et son secondaire ($3_b$, $3_c$; $20_b$) faiblement couplés entre eux.

4. Convertisseur continu-continu selon la revendication 1, **caractérisé en ce que** ledit circuit réactif série comprend une inductance ($L_r$) et une capacité ($C_r$) montées en série entre ledit onduleur (2) et ledit transformateur (3).

5. Convertisseur continu-continu selon l'une quelconque des revendications 2 à 4, **caractérisé en ce qu'**au moins une partie dudit circuit réactif série est formée par le câblage ($31_a$ à $31_n$) reliant ledit onduleur (2) audit transformateur (3; 20).

6. Convertisseur continu-continu selon l'une quelconque des revendications 1 à 5, **caractérisé en ce que** ledit transformateur (3) comprend un secondaire fait de deux demi-enroulements fortement couplés entre eux ($3_b$, $3_c$) et alimentant chacun l'un des circuits série d'une diode de puissance ($D_1$ ou $D_2$) et d'une self saturable ($L_{sat1}$ ou $L_{sat2}$) et **en ce que** ladite seconde tension ($V_s$) est prélevée entre le point milieu ($3_d$) entre les demi-enroulements ($3_b$, $3_c$) dudit secondaire et le noeud (4) entre lesdites diodes de puissance ($D_1$, $D_2$).

7. Convertisseur continu-continu selon l'une quelconque des revendications 1 à 5, **caractérisé en ce que** ledit redresseur commandé est monté en doubleur de tension (figures 8 à 10b).

8. Convertisseur continu-continu selon la revendication 7, **caractérisé en ce que** ledit transformateur (20) comprend un secondaire ($20_b$) dont l'une des bornes est connectée auxdits circuits série d'une diode de puissance ($D_1$ ou $D_2$) et d'une self saturable ($L_{sat1}$ ou $L_{sat2}$), et dont l'autre borne est connectée à chacune desdites diodes par l'intermédiaire d'un condensateur ($C_1$, $C_2$).

9. Convertisseur continu-continu selon l'une quelconque des revendications 7 et 8, lorsqu'elles dépendent de la revendication 1, **caractérisé en ce que** ledit circuit réactif série comprend une inductance ($L_r'$; $L_r''$) montée entre le secondaire ($20_b$) du transformateur (20) et ledit doubleur de tension.

10. Convertisseur continu-continu selon l'une quelconque des revendications 7 et 8, lorsqu'elles dépendent de la revendication 1, **caractérisé en ce que** ledit circuit réactif comprend une inductance ($L_r'$; $L_r''$) et une capacité ($C_r'$; $C_r''$) montées en série entre le secondaire ($20_b$) dudit transformateur (20) et ledit doubleur de tension.

11. Convertisseur continu-continu suivant l'une quelconque des revendications 7 et 8, prises ensemble avec la revendication 3, **caractérisé en ce que** ledit circuit réactif est matérialisé dans ledit transformateur (20) grâce à une répartition par construction entre le primaire ($20_a$) et le secondaire ($20_b$) de celui-ci, une capacité de résonance pouvant éventuellement être placée en série côté primaire et/ou côté secondaire.

12. Installation de distribution d'énergie électrique notamment pour satellite, **caractérisée en ce qu'**elle comprend un convertisseur continu-continu suivant l'une quelconque des revendications précédentes construit avec une pluralité d'unités de conversion ($30_a$ à $30_n$) raccordées chacune audit onduleur (2) par l'intermédiaire d'un câblage individuel ($31_a$ à $31_n$), et **en ce que** chacune desdites unités de conversion comporte son propre régulateur de tension (8).

13. Installation de distribution d'énergie électrique notamment pour satellite, **caractérisée en ce qu'**elle comprend un convertisseur continu-continu suivant l'une quelconque des revendications 1 à 11 construit avec une pluralité d'unités de conversion ($34_a$ à $34_c$), lesdites unités de conversion étant réparties en groupes (33) d'au moins trois unités dont les sorties sont mises en parallèle, et **en ce que** les unités de conversion de chacun desdits groupes sont raccordées par un câble multifilaire ($32_a$ à $32_n$) audit onduleur ($2_a$).

14. Installation de distribution d'énergie électrique suivant la revendication 13, **caractérisée en ce que** dans chacun desdits groupes (33) d'unités de conversion ($34_a$ à $34_c$), celles-ci sont reliées en triangle ou en étoile.

15. Installation de distribution d'énergie électrique suivant la revendication 13 ou la revendication 14, **caractérisée en**

**ce que** dans chacun desdits groupes (33) d'unités de conversion (34$_a$ à 34$_c$), celles-ci sont régulées par un régulateur unique commun (8).

16. Installation de distribution d'énergie électrique notamment pour satellite, **caractérisée en ce qu'**elle comprend un convertisseur suivant l'une quelconque des revendications 9 à 11 construit avec une pluralité d'unités de conversion alimentées par un transformateur commun (42) comprenant une pluralités de secondaires (45$_a$ à 45$_c$) à raison d'un par unité.

17. Installation de distribution suivant la revendication 16, **caractérisée en ce que** chacune desdites unités de conversion est pourvue de son propre régulateur (46$_a$ à 46$_c$).

18. Installation de distribution d'énergie électrique notamment pour satellite, **caractérisée en ce qu'**elle comprend un convertisseur suivant l'une quelconque des revendications 9 à 11 construit avec une pluralité d'unités de conversion (54$_a$ à 54$_c$) agencées en au moins un groupe d'unités de conversion alimentées par l'intermédiaire d'un transformateur commun (52) raccordé par son primaire (51) audit onduleur (50) et comprenant autant de secondaires (53$_a$ à 53$_c$) qu'il y a d'unités de conversion dans un groupe,
**en ce que** l'une (54$_a$) desdites unités de conversion d'un groupe est une unité de conversion pilote formée d'un redresseur symétrique dépourvu de moyens de déphasage,
**en ce que** ledit onduleur (50) est réglable,
**en ce que** l'installation comprend une boucle de réglage (56 à 58) agissant sur ledit onduleur (50) pour le régler en fonction d'un signal de différence entre un signal de référence de tension (V$_{refa}$) et un signal fonction de la tension de sortie (V$_{sa}$) de ladite unité de conversion pilote (54$_a$) et
**en ce que** les autres unités de conversion (54$_b$, 54$_c$) d'un groupe sont pourvus de leur propre régulateur (55$_b$, 55$_c$).

**Patentansprüche**

1. Gleichstrom-Gleichstrom-Wandler, vorgesehen zum Umwandeln von elektrischer Energie, die von einer ersten Energiequelle (1) bereitgestellt wird, die eine erste Gleichspannung und einen ersten Gleichstrom mit ersten jeweiligen Werten in elektrische Ausgangsenergie mit einer zweiten Gleichspannung (V$_S$) und mit einem zweiten Gleichstrom (I$_S$) mit jeweiligen zweiten Werten umwandelt, wobei der Wandler aufweist

   - einen Wechselrichter (2), der durch die Energiequelle (1) mit Energie versorgt wird, und vorgesehen ist, Wechselstrom Energie mit einer dritten Spannung (V$_e$) mit einem dritten Strom (I$_e$) zu erzeugen,
   - eine Umwandlungseinheit (UC$_a$ bis UC$_f$), vorgesehen, die Ausgangsenergie zu liefern und
   - einen Regler (8), der zu der Umwandlungseinheit (UC$_a$ bis UC$_f$) gehört, zum Regeln der zweiten Spannung (V$_S$),
   - wobei die Umwandlungseinheit (UC$_a$ bis UC$_f$) einen Transformator (3; 20) aufweist, der von dem Wechselrichter (2) mit Energie versorgt wird und an einen gesteuerten Gleichrichter liefert, der dazu vorgesehen ist, die zweite Spannung (V$_S$) bereitzustellen,
   - wobei der gesteuerte Gleichrichter zwei Seriell-Schaltungen mit entgegengesetzten Leitungssinn aufweist, wobei jeder aus einer Leistungs-Diode (D$_1$, D$_2$) und einer sättigungsfähigen Drossel (L$_{sat1}$, L$_{sat2}$) zusammengesetzt ist, wobei die sättigungsfähigen Drosseln auf magnetischen Weg während jedes Zyklus der durch den Wechselrichter (2) gelieferten dritten Spannung (V$_e$) die Zeitpunkte zum Versetzen der Leistungs-Dioden (D$_1$, D$_2$) in den Leitzustand und aus dem Leitzustand steuern,
   - und der Regler (8) zum Analysieren der zweiten Spannung (V$_S$) der Ausgangsenergie und zum Erzeugen, in Abhängigkeit von dieser Analyse, einer Steuer-Spannung (-V$_C$), die dazu vorgesehen ist, die zweite Spannung (V$_S$) zu regeln, geschaltet ist,
   - wobei der gesteuerte Gleichrichter auch zwei Regel-Dioden (d$_1$, d$_2$) aufweist, die zum Injizieren der Steuer-Spannung (-V$_C$) jeweils an die Verbindungsknoten zwischen der Leistungs-Diode (D1; D2) und der sättigungsfähigen Drossel (L$_{sat1}$, L$_{sat2}$) der Seriell-Schaltungen des gesteuerten Gleichrichters geschaltet sind,

   wobei der Wandler dadurch charakterisiert ist, dass er auch eine reaktive Seriellschaltung (L$_r$; 17; L$_r$, C$_r$; L$_r$', C$_r$'; 25; L$_r$'', C$_r$'') aufweist, die zu dem Transformator (3; 20) gehört und mit dem gesteuerten Gleichrichter zum Phasen verschieben der dritten Spannung (V$_e$) bezüglich des dritten Stroms (I$_e$) zusammenarbeitet, und dadurch, dass die Steuerspannung (V$_C$) die Phasenverschiebung zwischen jenen abhängig von Variationen der zweiten Spannung (V$_S$) regelt.

2. Gleichstrom-Gleichstrom-Wandler gemäß Anspruch 1, dadurch charakterisiert, dass die reaktive Seriellschaltung

eine Induktivität ($L_r$) aufweist, die zwischen den Wechselrichter (2) und den Transformator (3) montiert ist.

3. Gleichstrom-Gleichstrom-Wandler gemäß Anspruch 1, dadurch charakterisiert, dass die reaktive Schaltung in dem Transformator (3; 20) realisiert ist, der zu diesem Zweck zwischen seiner Primärseite ($3_a$; $20_a$) und seiner Sekundärseite ($3_b$, $3_c$; $20_b$) eine signifikante Leck-Induktivität (17; 25) aufweist, die schwach zwischen sie gekoppelt ist.

4. Gleichstrom-Gleichstrom-Wandler gemäß Anspruch 1, dadurch charakterisiert, dass die reaktive Seriellschaltung eine Induktivität ($L_r$) und eine Kapazität ($C_r$) aufweist, die in Serie zwischen den Wechselrichter (2) und den Transformator (3) montiert sind.

5. Gleichstrom-Gleichstrom-Wandler gemäß einem der Ansprüche 2-4, dadurch charakterisiert, dass mindestens ein Teil der reaktiven Seriellschaltung durch eine Verkabelung ($31_a$ bis $31_n$) gebildet ist, die den Wechselrichter (2) mit dem Transformator (3; 20) verbindet.

6. Gleichstrom-Gleichstrom-Wandler gemäß einem der Ansprüche 1-5, dadurch charakterisiert, dass der Transformator (3) eine Sekundärseite aufweist, die aus zwei Halbwicklungen gemacht ist, die stark miteinander gekoppelt sind ($3_b$, $3_c$) und jede eine der Seriellschaltungen einer Leistungs-Diode ($D_1$ oder $D_2$) und einer sättigungsfähigen Drossel ($L_{sat1}$ oder $L_{sat2}$) mit Energie versorgt und dadurch, dass die zweite Spannung ($V_S$) zwischen dem Mittelpunkt ($3_d$) zwischen den Halbwicklungen ($3_b$, $3_c$) der Sekundärseite und dem Knoten (4) zwischen den Leistungs-Dioden (D1, D2) entnommen wird.

7. Gleichstrom-Gleichstrom-Wandler gemäß einem der Ansprüche 1-5, dadurch charakterisiert, dass der gesteuerte Gleichrichter als Spannungsverdoppler (Figuren 8 bis 10b) montiert ist.

8. Gleichstrom-Gleichstrom-Wandler gemäß Anspruch 7, dadurch charakterisiert, dass der Transformator (20) eine Sekundärseite ($20_b$) aufweist, von der einer der Anschlüsse mit den Seriellschaltungen einer Leistungs-Diode ($D_1$ oder $D_2$) und einer sättigungsfähigen Drossel ($L_{sat1}$ oder $L_{sat2}$) verbunden ist und von dem der andere Anschluss mit jeder der Dioden mittels eines Kondensators ($C_1$, $C_2$) verbunden ist.

9. Gleichstrom-Gleichstrom-Wandler gemäß einem der Ansprüche 7 und 8, wenn sie von Anspruch 1 abhängen, dadurch charakterisiert, dass die reaktive Seriellschaltung eine Induktivität ($L_r'$; $L_r''$) aufweist, die zwischen die Sekundärseite ($20_b$) des Transformators (20) und den Spannungsverdoppler montiert ist.

10. Gleichstrom-Gleichstrom-Wandler gemäß einem der Ansprüche 7 und 8, wenn sie von Anspruch 1 abhängen, dadurch charakterisiert, dass die reaktive Schaltung eine Induktivität ($L_r'$; $L_r''$) und eine Kapazität ($C_r'$; $C_r''$) aufweist, die in Serie zwischen die Sekundärseite (20b) des Transformators (20) und den Spannungsverdoppler montiert sind.

11. Gleichstrom-Gleichstrom-Wandler gemäß irgendeinem der Ansprüche 7 und 8, zusammengenommen mit Anspruch 3, dadurch charakterisiert, dass die reaktive Schaltung in dem Transformator (20) dank einer Aufteilung durch Konstruktion zwischen der Primärseite ($20_a$) und der Sekundärseite ($20_b$) davon realisiert ist, wobei eine Resonanzkapazität eventuell in Serie auf der Primärseite und/oder der Sekundärseite platziert werden kann.

12. Anordnung zum Verteilen elektrischer Energie, insbesondere für einen Satelliten, dadurch charakterisiert, dass sie einen Gleichstrom-Gleichstrom-Wandler gemäß irgendeinem der vorhergehenden Ansprüche, konstruiert mit einer Mehrzahl von Umwandlungseinheiten ($30_a$ bis $30_n$), die jede mit dem Wechselrichter (2) mittels einer individuellen Verkabelung (31a bis 31n) verbunden ist, aufweist und dadurch, dass jede der Umwandlungseinheiten ihren eigenen Spannungsregler (8) aufweist.

13. Anordnung zum Verteilen von elektrischer Energie, insbesondere für einen Satelliten, dadurch charakterisiert, dass sie einen Gleichstrom-Gleichstrom-Wandler gemäß irgendeinem der vorhergehenden Ansprüche 1 bis 11, konstruiert mit einer Mehrzahl von Umwandlungseinheiten ($34_a$ bis $34_c$), aufweist, wobei die Umwandlungseinheiten in Gruppen (33) mit mindestens drei Einheiten, deren Ausgänge parallel angeordnet sind, aufgeteilt sind, und dadurch, dass die Umwandlungseinheiten von jeder der Gruppen über ein mehrfaseriges Kabel ($32_a$ bis $32_n$) mit dem Wechselrichter ($2_a$) verbunden sind.

14. Anordnung zum Verteilen elektrischer Energie gemäß Anspruch 13, dadurch charakterisiert, dass in jeder der Gruppen (33) von Umwandlungseinheiten ($34_a$ bis $34_c$) diese in einem Dreieck oder in einem Stern verbunden sind.

**15.** Anordnung zum Verteilen von elektrischer Energie gemäß Anspruch 13 oder Anspruch 14, dadurch charakterisiert, dass in jeder der Gruppen (33) von Umwandlungseinheiten ($34_a$ bis $34_c$) diese durch einen einzigen gemeinsamen Regler (8) geregelt werden.

**16.** Anordnung zum Verteilen elektrischer Energie, insbesondere für einen Satelliten, dadurch charakterisiert, dass sie einen Wandler gemäß irgendeinem der Ansprüche 9 bis 11 aufweist, konstruiert mit einer Mehrzahl von Umwandlungseinheiten, die von einem gemeinsamen Transformator (42) mit Energie versorgt werden, der eine Mehrzahl von Sekundärseiten ($45_a$ bis $45_c$), einen pro Einheit, aufweist.

**17.** Anordnung zum Verteilen gemäß Anspruch 16, dadurch charakterisiert, dass jede der Umwandlungseinheiten mit ihrem eigenen Regler ($46_a$ bis $46_c$) versehen ist.

**18.** Anordnung zum Verteilen elektrischer Energie, insbesondere für einen Satelliten, dadurch charakterisiert, dass sie einen Wandler gemäß irgendeinem der Ansprüche 9 bis 11, konstruiert mit einer Mehrzahl von Umwandlungseinheiten ($54_a$ bis $54_c$) aufweist, die in mindestens eine Gruppe von Umwandlungseinheiten eingeteilt sind, die mittels eines gemeinsamen Transformators (52) mit Energie versorgt werden, der mit seiner Primärseite (51) mit dem Wechselrichter (50) verbunden ist und ebenso viele Sekundärseiten ($53_a$ bis $53_c$) aufweist, wie es Umwandlungseinheiten in der Gruppe gibt, dadurch, dass eine ($54_a$) der Umwandlungseinheiten in einer Gruppe eine richtungsweisende Umwandlungseinheit ist, die durch einen symmetrischen Gleichrichter ohne Phasenverschiebungsmittel gebildet ist,
dadurch, dass der Wechselrichter (50) regelbar ist, dadurch, dass die Anordnung eine Regelschleife (56-58) aufweist, die auf den Wechselrichter (50) einwirkt, um ihn in Abhängigkeit eines Differenzsignals zwischen einem Referenz-Spannungssignal ($V_{refa}$) und einem von der Ausgangsspannung ($V_{sa}$) der richtungsweisenden Umwandlungsheit ($54_a$) abhängigen Signal zu regeln und
dadurch, dass die anderen Umwandlungseinheiten ($54_b$, $54_c$) einer Gruppe mit ihrem eigenen Regler ($55_b$, $55_c$) versehen sind.

## Claims

**1.** A DC-DC converter intended to convert electrical energy provided by an energy source (1) delivering a first direct voltage and a first direct current having respective first values into output electrical energy at a second direct voltage ($V_s$) and a second direct current ($I_s$) having respective second values, said converter including:

- an inverter (2) powered by said energy source (1) and intended to create alternative energy at a third voltage ($V_e$) and with a third current ($I_e$),
- a conversion unit ($UC_a$ to $UC_f$) intended to deliver said output energy, and
- a regulator (8) associated with said conversion unit ($UC_a$ to $UC_f$) to regulate said second voltage ($V_s$),
- said conversion unit ($UC_a$ to $UC_f$) having a transducer (3; 20) powered by said inverter (2) and feeding into a controlled rectifier intended to provide said second voltage ($V_s$),
- said controlled rectifier including two serial circuits with opposite conduction directions each made up of a power diode ($D_1$, $D_2$) and a saturable induction coil ($L_{sat1}$, $L_{sat2}$), said saturable induction coils magnetically controlling, during each cycle of the third voltage ($V_e$) delivered by said inverter (2), the beginning- and end-of-conduction moments of said power diodes ($D_1$, $D_2$), and
- said regulator (8) being connected to analyze said second voltage ($V_s$) of said output energy and, as a function of that analysis, to create a control voltage ($-V_c$) intended to regulate said second voltage ($V_s$),
- said controlled rectifier also including two regulating diodes ($d_1$, $d_2$) connected to inject said control voltage ($-V_c$) respectively into the connection nodes between the power diode ($D_1$; $D_2$) and the saturable induction coil ($L_{sat1}$, $L_{sat2}$) of said serial circuits of said controlled rectifier,

said converter being **characterized in that** it also includes a reactive serial circuit ($L_r$; 17; $L_r$, $C_r$; $L_r'$, $C_r'$; 25; $Lr''$, $C_r''$) associated with said transducer (3; 20) and cooperating with said controlled rectifier to phase-shift said third voltage ($V_e$) relative to said third current ($I_e$), and **in that** said control voltage ($V_c$) regulates the phase shift between them as a function of the variations of said second voltage ($V_s$).

**2.** The DC-DC converter according to claim 1, **characterized in that** said reactive serial circuit comprises an inductance ($L_r$) mounted between said inverter (2) and said transducer (3).

3. The DC-DC converter according to claim 1, **characterized in that** said reactive circuit is realized in said transducer $(3; 20)$, which to that end has a significant leakage inductance $(17; 25)$ between its primary $(3_a; 20_a)$ and its secondary $(3_b, 3_c; 20_b)$, weakly coupled to one another.

4. The DC-DC converter according to claim 1, **characterized in that** said reactive serial circuit comprises an inductance $(L_r)$ and a capacitance $(C_r)$ mounted in series between said inverter (2) and said transducer (3).

5. The DC-DC converter according to any one of claims 2 to 4, **characterized in that** at least part of said reactive serial circuit is formed by the cabling $(31_a$ to $31_n)$ connecting said inverter (2) to said transducer $(3; 20)$.

6. The DC-DC converter according to any one of claims 1 to 5, **characterized in that** said transducer (3) includes a secondary made from two half-windings strongly coupled to one another $(3_b, 3_c)$ and each powering one of the serial circuits of a power diode $(D_1$ or $D_2)$ and a saturable induction coil $(L_{sat1}$ or $L_{sat2})$, and **in that** said second voltage $(V_s)$ is taken between the middle point $(3_d)$ between the half-windings $(3_b, 3_c)$ of said secondary and the node (4) between said power diodes $(D_1, D_2)$.

7. The DC-DC converter according to any one of claims 1 to 5, **characterized in that** said controlled rectifier is mounted as a voltage doubler (figures 8 to 10b).

8. The DC-DC converter according to claim 7, **characterized in that** said transducer (20) has a secondary $(20_b)$ whereof one of the terminal is connected to said serial circuits of a power diode $(D_1$ or $D_2)$ and a saturable induction coil $(L_{sat1}$ or $L_{sat2})$, and whereof the other terminal is connected to each of said diodes by means of a capacitor $(C_1, C_2)$.

9. The DC-DC converter according to any one of claims 7 and 8, when they depend on claim 1, **characterized in that** said reactive serial circuit comprises an inductance $(L_r'; L_r'')$ mounted between the secondary $(20_b)$ of the transformer (20) and said voltage doubler.

10. The DC-DC converter according to any one of claims 7 and 8, when they depend on claim 1, **characterized in that** said reactive circuit comprises an inductance $(L_r'; L_r'')$ and a capacitance $(C_r'; C_r'')$ mounted in series between the secondary $(20_b)$ of said transducer (20) and said voltage doubler.

11. The DC-DC converter according to any one of claims 7 and 8, taken together with claim 3, **characterized in that** said reactive circuit is realized in said transducer (20) owing to a distribution by construction between the primary $(20_a)$ and the secondary $(20_b)$ thereof, a resonance capacitance being possibly be placed in series on the primary side and/or secondary side.

12. An electricity distribution facility, in particular for a satellite, **characterized in that** it includes a DC-DC converter according to any one of the preceding claims, built with a plurality of conversion units $(30_a$ to $30_n)$ each connected to said inverter (2) by means of an individual cabling $(31_a$ to $31_n)$, and **in that** each of said conversion units comprises its own voltage regulator (8).

13. An electricity distribution facility, in particular for a satellite, **characterized in that** it includes a DC-DC converter according to any one of claims 1 to 11, built with a plurality of conversion units $(34_a$ to $34_c)$, said conversion units being distributed in groups (33) of at least three units whereof the outputs are placed in parallel, and **in that** the conversion units of each of said groups are connected to said inverter $(2_a)$ by a multi-line cable $(32_a$ to $32_n)$.

14. The electricity distribution facility according to claim 13, **characterized in that** in each of said groups (33) of conversion units $(34_a$ to $34_c)$, said conversion units (34a to 34c) are connected in triangle or in star.

15. The electricity distribution facility according to claim 13 or claim 14, **characterized in that** in each of said groups (33) of conversion units $(34_a$ to $34_c)$, said conversion units (34a to 34c) are regulated by a single common regulator (8).

16. An electrical energy distribution facility, in particular for a satellite, **characterized in that** it includes a converter according to any one of claims 9 to 11, built with a plurality of conversion units powered by a common transducer (42) including a plurality of secondaries $(45_a$ to $45_c)$ at a rate of one per unit.

17. The distribution facility according to claim 16, **characterized in that** each of said conversion units is equipped with its own regulator $(46_a$ to $46_c)$.

**18.** An electrical energy distribution facility, in particular for a satellite, **characterized in that** it includes a converter according to any one of claims 9 to 11, built with a plurality of conversion units ($54_a$ to $54_c$) arranged in at least one group of conversion units powered by means of a common transducer (52) connected by its primary (51) to said inverter (50) and including as many secondaries ($53_a$ to $53_c$) as there are conversion units in a group,

**in that** one ($54_a$) of said conversion units of a group being a pilot conversion unit formed by a symmetrical rectifier with no phase shift means,

**in that** said inverter (50) is adjustable,

**in that** the facility includes an adjustment loop (56 to 58) acting on said inverter (50) to adjust it as a function of the difference signal between a voltage reference signal ($V_{refa}$) and a signal depending on the output voltage ($V_{sa}$) of said pilot conversion unit ($54_a$), and

**in that** the other conversion units ($54_b$, $54_c$) of a group being provided with their own regulator ($55_b$, $55_c$).

EP 2 504 912 B1

FIG.1

FIG.2

15

FIG.3

FIG.4

FIG.5

FIG.6

FIG.7

Ve

+Ve
Vs
-Vc
-Ve

Ve'1
VD1d1

+Ve
Vs
-Vc
-Ve

Ve'2
VD2d2

Ie

Icoer

$\gamma_T$

$\gamma_T$

FIG.8

FIG.8a

FIG.8b

FIG.9

FIG.10a

FIG.10b

FIG.10

FIG.11

FIG.12

EP 2 504 912 B1

FIG.13

FIG.14

EP 2 504 912 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2001275361 B

- US 5539630 A

**Littérature non-brevet citée dans la description**

- *bulletin technique N°SR-4,* 1999